# EUROPEAN PATENT SPECIFICATION

(11) **EP 1 399 289 B1**
(45) Date of publication and mention of the grant of the patent: **08.05.2013**
(21) Application number: 02734995.0
(22) Date of filing: 14.06.2002
(51) Int. Cl.: B23Q 1/56, B23Q 1/60, F16H 21/44, B23Q 1/62, B23Q 1/54

(54) **PARALLEL POSITIONING MECHANISM, ESPECIALLY FOR MACHINING AND/OR MANIPULATION AND/OR MEASURING**
PARALLELE POSITIONIERVORRICHTUNG, INSBESONDERE FÜR EINE BEARBEITUNGS- UND/ODER HANDHABUNGS- UND/ODER MESSEINRICHTUNGEN
MECANISME DE POSITIONNEMENT PARALLELE PERMETTANT NOTAMMENT D'EFFECTUER UN USINAGE ET/OU UNE MANIPULATION ET/OU UNE MESURE

(30) Priority: 18.06.2001 CZ 20012214
(43) Date of publication of application: 24.03.2004
(73) Proprietor: Kovosvit Mas A.S., 391 02 Sezimovo sti (CZ); Ceské vysoké uceni technické v Praze, Fakulta strojni, 16607 Praha 6 (CZ)
(72) Inventor: VAL SEK, Michael, 110 00 Praha 1 (CZ); PETRU, Frantisek, 391 02 Sezimovo sti (CZ); SIKA, Zbynek, 160 00 Praha 6 (CZ); BAUMA, Václav, 152 00 Praha 5 (CZ); VAMPOLA, Tomás, 273 54 Lidice (CZ)
(74) Representative: Novotny, Karel
(86) International application number: PCT/CZ2002/000034
(87) International publication number: WO 2002/102543

(56) References cited:
- EP-A- 0 330 790
- EP-A- 0 916 446
- EP-A- 1 112 806
- EP-A- 1 228 838
- WO-A-99/32256
- CH-A- 380 469
- DE-A- 19 525 482
- FR-A- 2 800 659
- FR-A- 2 816 230
- GB-A- 1 117 589
- US-A- 4 993 673
- US-A- 5 339 749
- US-A- 5 807 044
- PATENT ABSTRACTS OF JAPAN vol. 010, no. 220 (P-482), 31 July 1986 (1986-07-31) & JP 61 055708 A (MATSUSHITA ELECTRIC IND CO LTD), 20 March 1986 (1986-03-20)

## Description

### Field of the Technology

The invention relates to a parallel positioning mechanism, especially for machining and/or manipulation and/or measuring, consisting of a platform for the carrying and/or manipulation with, for instance, a tool, a workpiece, a measuring device or the like, wherein the platform is connected with the machine frame by means of at least one positioning arm. Such devices are known from EP 1228838A1 and EP 0916446A1.

### Current State of the Art

In the recent past, there has been proposed and constructed a multitude of parallel positioning mechanisms, primarily for the use in machine tools, for the manipulation of robots and the like. Manipulators and robots were primary devices in which parallel positioning mechanisms have been implemented. Their advantages when compared with the mechanisms used in serial robots are, above all, increased rigidity and improved dynamics. The higher rigidity is given by the very essence of the parallel arms as a latticework construction. Improved dynamics is to be found in the fact that the drives can be mounted on the frame and they need not be moved with the movable arms as they are in serial robots, from which there results a lower weight of the moving machine parts. A disadvantage of the existing positioning mechanisms is a more frequent incidence of singular positions, which limit the working space. In the singular position, the mechanism has excessive degrees of freedom and loses its rigidity.

Another disadvantage of many parallel positioning mechanisms is that the parallel arms are connected to the frame of the machine or, at the other end, to the platform carrying the tool, by means of a spherical joint, which has a lower rigidity due to the point contact of force transmission, or the joint is configured as a universal joint with limited movability.

### Essence of the Invention

The aforementioned disadvantages and drawbacks are, to a great extent, removed in a parallel positioning mechanism according to the invention, as shown in claim 1.

Alternatively, the platform may be connected with one sliding guide and through two positioning arms with this or another sliding guide.

In another implementation, the platform may be joint-connected through four positioniong arms with at least two sliding guides.

In another implementation, the platform may be joint-connected through four positioning arms with four sliding guides.

The projections of the axes of rotation of the rotatable joints of the platform into a plane perpendicular to them form a trapezoid.

The construction of the parallel positioning mechanism according to the invention by a direct connection of the platform with the sliding guide through a single positioning arm or even by the connection of the platform with the sliding guide(s) by using excess, that is four, positioning arms for three degrees of freedom of movement, wherein the angular position in a plane can be held permanently constant, means an important increase in the size of the working space and simultaneously the achievement of an improved homogeneity of mechanical properties of rigidity and dynamics. The use of rotatable joints for all joints contributes to the increase in rigidity.

The direct securing of the platform to the sliding guide by means of the rotatable joint and by means of the single positioning arm, or the use of excess positioning arms for the connection of the platform with the sliding guide(s) reduces the occurrence of singular positions. Excess positioning arms significantly reduce inhomogeneity in the rigidity and dynamic properties in the working space of the machine.

### Overview of the Figures of the Drawing

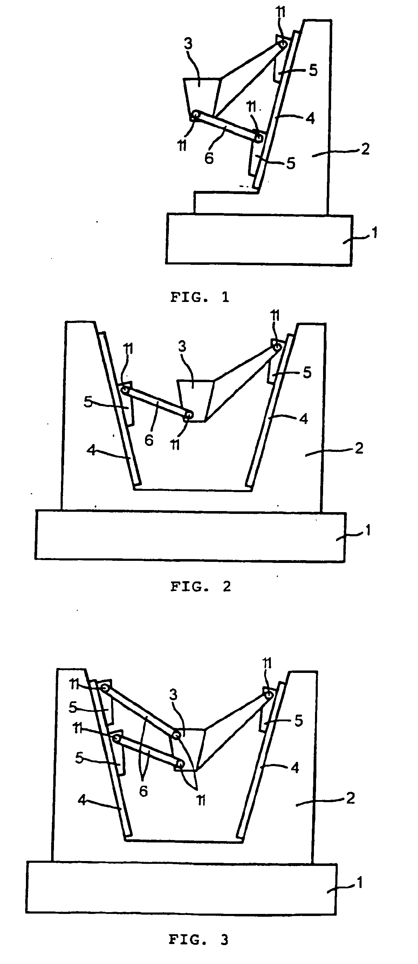

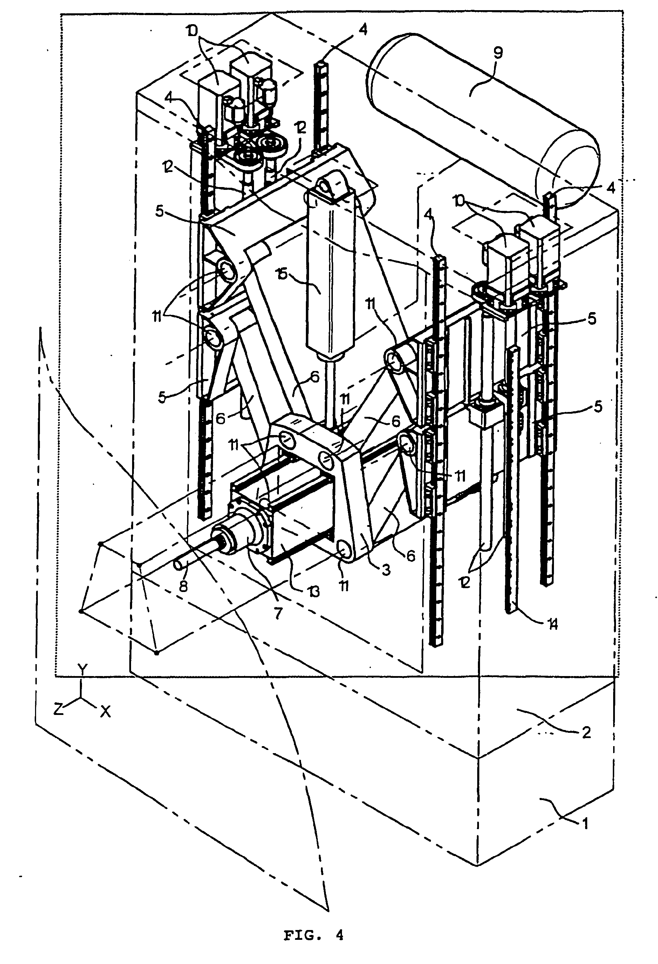

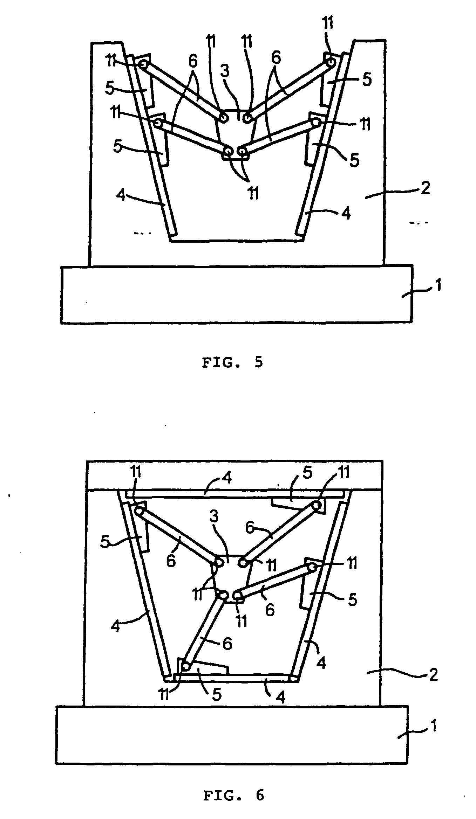

The parallel positioning mechanism according to the invention is diagrammatically illustrated in the accompanying drawing, wherein Fig. 1 shows the connection of the platform with a single sliding guide, Fig. 2 shows the connection of the platforms with sliding guides with the use of a single positioning arm, Fig. 3 shows the connection of the platform with the sliding guides utilizing two positioning arms, Fig. 4 shows, in an isometric view, the connection of the platform with sliding guides by means of four positioning arms, Fig. 5 shows in a front elevational view the positioning mechanism illustrated in Fig. 4 but with a different arrangement of the sliding guides, and Fig. 6 shows another alternative implementation, in which the platform is connected with fours intersecting sliding guides by means of four positioning arms.

### Examples of the Implementation of the Invention

A parallel positioning mechanism for machining, for instance on machining centers, milling machines, for manipulation, for instance in industrial robots, with utilization, for instance, even for measuring and the like, consists of a base 1 of the machine, which carries a frame 2 of the machine. The frame 2 of the machine is arranged rigidly or slidably with respect to the base 1 of the machine, while sliding guides 4 are provided therein.

In Fig. 1, a platform 3 is connected with a single sliding guide 4 by means of three rotatable joints 11, of which two are arranged on a single positioning arm 6, whereas the third rotatable joint 11 connects the platform 3 with the sliding guide 4 directly. The rotatable joints 11 used in this implementation, as well as all other joints 11 used in all of the following implementations, are constituted by joints rotatable about a single axis, and are always mutually parallel.

As is evident from Fig. 2, two sliding guides 4 extend along straight lines that are intersecting; however, they may also be parallel. The platform 3 is arranged between the two sliding guides 4 and is connected with one of the sliding guides 4 by means of one positioning arm 6, which is provided at each of its ends with a roratable joint 11, one for a rotatable connection with the platform 3 and the other for the connection with the first sliding guide 4, and that by means of a positionable carriage 5 which is movable in the sliding guide 4. The platform 3 is further connected directly, via a further rotatable joint 11, with the second sliding guide 4. This rotatable joint 11 is also arranged on a positionable carriage 5, which is movable in this second sliding guide 4.

In Fig 3, there is illustrated a similar parallel positioning mechanism to that evident from Fig. 2, with the platform 3 being connected with the first sliding guide 4 by means of two positioning arms 6, of which each is provided with two rotatable joints 11, one for the connection with the platform 3 and the other for connection with the sliding guide 4 via positioning carriages 5. The connection of the platform 3 with the second sliding guide is similar to the implementation according to Fig. 2. It is also possible, withing the framework of the invention, to use a single sliding guide 4 in the implementation according to Fig 3 as well.

In Fig. 4, there is visible the implementation of a parallel positioning mechanism with four positioning arms 6, wherein two of the positioning arms 6 each provided with rotatable joints 11 at each of its ends connect the platform 3 with one sliding guide 4 and the two other positioning arms 6 connect the platform 3 with another sliding guide 4 that is arranged at the opposite side of the platform 3 than the one sliding guide 4. The sliding guides 4 arranged at each side of the platform 3 are formed in each instance by two guiding brackets, on which the positionable carriages 5 are movable. Each of the positionable carriages 5 is guided on both of the guiding brackets, and it is connected by means of the rotatable joint 11 with one of the positioning arms 6 in each instance. The positioning arms 6 that are guided on the first sliding guide 4, and on the second sliding guide 4, are arranged one underneath the other. The movement of the positionable carriages 5 is accomplished by ball screws 12 with nuts driven by driving motors 10. In the alternative, the movement of he positionable carriages 5 can be solved as a drive with a linear drive (not shown). The primary part of the drive is then rigidly connected with the frame 2 and the secondary part is connected with the positionable carriages 5.

The exact position of the positionable carriages 5 with rtespect to the frame 2 of the machine is measured by means of a measuring system 14. The positionable carriages 5 conduct linear, straigt-line, movements on the sliding guides 4 on the frame 2 of the machine. This movement is thren transmitted through the rotatable joints 11 to the positioning arms 6 which are connected by the rotatable joint 11 with the platform 3. The positioning arms 6 configured as a rigid spatial prism are thermally stabilized or alr\ternatively they are manufactured from materials with a minimum longitudinal thermal expansion. The rotatable joints 11 of the positioning carriages 5 and the platform 3 are constituted by pre-stressed taper roller bearings with high radial and axial rigidity and strength.

The platform 3 carries a chuck 7 with a tool 8, the translational movement of which is achieved by means of a linear rolling guide and a sliding block 13. The movement of the sliding block 13 with the chuck 7 is accmplkished similarly to the drive of the positioning carriages 5, also by means of a rotary driving motor and a roller screw (not shown). The sliding block 13 carries the drive for the Z-axis and the associated measuring system 14 and forms the translational movement of the chuck 7 with the tool 8 along the Z-axis of the machine. The sliding block 13 is mounted in the platform 3 on linear rolling guides.

Between the platform 3 of the machine and the frame 2 of the machine, there is arranged a counterbalancing system with a pneumatic cylinder 15 and a pressurized air container 9; by its force influence, it eliminates that of the weight of the platform 3 and of the parts contained thereon.

The rotary motors 10 control, via transmissions, spherical roller screws 12 with nuts, and with the aid of the measuring systems 14, the translational movements of the positionable carriages 5 on the sliding guides 4 of the frame 4 of the machine. In Fig. 4, there is shown only the measuring system 14 for the measuing of the position of the positionable carriages 5 connected with one of the sliding guides 4; a symmetrically arranged measuring system for the measuring of the position of the positionalbe carriages 5 connected with the other sliding guide 4 is not shown.

The movement of the positionable carriages 5 is transformed via the positionable arms 6 and the rotatable joint 6 into the desired movement of the platform 3 in the X-Y-plane. The platform 3 carries the sliding block 13 with the chuck 7 and the tool 8. Their translational movement along the Z-axis is accomplished by the displacement of the sliding block 13 with respect to the platform 3. The tool 8 may be a machining tool, or a gripping tool for manipulation, or a measuring sensor for measuring. The translatable mounting of the chuch 7 may be replaced by the arrangement of a translatable working support in front of or on the base 1 of the machine (not illustrated); in the alternative, it is possible to use both the translatable chuck 7, and the translatable working support.

In Fig. 4, the sliding guides 4 are parallel to a single straight line. It is also possible to use an arrangement in which each of the four positioning arms 6 is guided on an individual sliding guide 4, or where three sliding guides 4 are provided for the four positioning arms 6.

In Figs. 2, 3 and 5, there is illustrated an alternative implementation of the arrangement of the sliding guides 4, in which these guides are parallel to two stright lines, whereas Fig. 8 shows the most general arrangement of the sliding guides 4, where all of the sliding guides 4 extend along generic directions; in this particular case, two of the sliding guides 4 are mutually parallel and at the same in intersecting relatinships with the other two sliding guides 4. There is also possible an arrangement of the four sliding guides where all of the sliding guides are in intersecting relationships with respect to each other.

In the framework of the invention, it is also possible to use sliding guides that are extending along courses deviating from straight lines; a necessary condition, though, is the assurance of the parallelism of the axes of the rotatable joints.

## Claims

1. Parallel positioning mechanism, especially for machining and/or manipulation and/or measuring, consisting of a platform for the carrying and/or manipulation with, for instance, a tool, a workpiece, a measuring device or the like, wherein the platform is connected with the machine frame by means of at least one positioning arm, wherein the platform (3) is joint-connected with at least two sliding guide (4) via at least three rotatable joints (11) of which at least two are arranged on a positioning arm (6) for the connection with the sliding guide (4), wherein the axes of rotation of the rotatable joints are mutually parallel, **characterized in that** sliding guide (4) are in mutually intersection ralationship.

2. Parallel positioning mechanism according to claim 1, **characterized in that** the platform (3) is connected with one sliding guide (4) and through two positioning arms (6) with this or another sliding guide (4).

3. Parallel positioning mechanism according to claims 1, **characterized in that** the platform is joint connected through four positioning arms (6) with at least two sliding guides (4).

4. Parallel positioning mechanism according to claims 1, **characterized in that** the platform (3) is joint-connected through four positioning arms (6) with four sliding guide (4).

5. Parallel positioning mechanism according to claims 3 and 4, **characterized in that** the projections of the axis of rotation of the rotatable joints (11) of the platform (3) into a plane perpendicular to them form a trapezoid.

## Patentansprüche

1. Paralleler Positioniermechanismus, insbesondere beim Zerspanen und/oder Messen, bestehend aus der Plattform zum Tragen und/oder zur Manipulation z.B. mit dem Werkzeug, dem Erzeugnis, der Messeinrichtung u. dergl., wobei die Plattform mit dem Maschinenrahmen mit Hilfe zumindest eines Positionierarmes verbunden ist, und die Plattform (3) gelenkig mit zumindest zwei Verschiebungsführungen (4) mittelst wenigstens drei Drehgelenken (11) gelenkig verbunden ist, von welchen wenigstens zwei auf dem Positionierarm (6) für die Verbindung mit der Verschiebungsführung (4) angeordnet sind, wobei die Drehachsen der Drehgelenke untereinander parallel sind, **dadurch gekennzeichnet, dass** die Verschiebungsführungen (4) sich gegenseitig schneiden.

2. Paralleler Positioniermechanismus gemäß Anspruch 1, **gekennzeichnet dadurch, dass** die Plattform (3) mit einer Verschiebungsführung und zwei Positionierarmen (6) mit dieser oder einer weiteren Verschiebungsführung verbunden ist.

3. Paralleler Positioniermechanismus, gemäß Anspruch 1, **gekennzeichnet dadurch, dass** die Plattform (3) über vier Positionierarme (6) mit wenigstens zwei Verschiebungsführungen (4) verbunden ist.

4. Paralleler Positioniermechanismus, gemäß Anspruch 1, **gekennzeichnet dadurch, dass** die Plattform (3) über vier Positionierarme (6) mit vier Verschiebungsführungen (4) verbunden ist.

5. Paralleler Positioniermechanismus gemäß Anspruch 3 und 4, **gekennzeichnet dadurch, dass** die Projektionen der Drehachsen der Drehgelenke (11) der Plattform (3) in der zu diesen senkrechten Ebene ein Trapez bilden.

## Revendications

1. Un mécanisme de positionnement parallèle, surtout celui à usiner et/ou à manipuler et/ou à mesurer, consistant en plateforme à port et à manipulation p. ex. d'un outil, produit, appareil de mesure etc., la plateforme étant alliée à un cadre de la machine tout au moins au moyen d'une flèche de positionnement, la plateforme (3) étant articulée tout au moins à deux guides glissants (4) au moyen tout au moins de trois articulations rotatives (11), dont au moins deux sont organisées sur une flèche de positionnement (6)pour le but d'une liaison avec un guide glissant (4), les axes de rotation des articulations rotatives étant mutuellement parallèles, **caractérisé en ce que** les guides glissants (4) sont mutuellement concourants.

2. Un mécanisme de positionnement parallèle de la revendication1, **caractérisé en ce que** la plateforme (3) est alliée avec un guide glissant (4) et deux flèches de positionnement (6) avec ce guide glissant ou avec celui ultérieur(4).

3. Un mécanisme de positionnement parallèle selon la revendication 1, **caractérisé en ce que** la plateforme (3) est articulée au travers de quatre flèches de positionnement (6) avec tout au moins deux guides glissants (4).

4. Un mécanisme de positionnement parallèle selon la revendication 1, **caractérisé en ce que** la plateforme (3) est articulée au travers de quatre flèches de positionnement (6) avec quatre guides glissants (4).

5. Un mécanisme de positionnement parallèle selon les revendications 3 et 4, **caractérisé en ce que** les projections des axes de rotation des articulations rotatives (11) de la plateforme (3) sur une surface plane perpendiculaire sur les derniers forme un trapèze.
